# EUROPEAN PATENT SPECIFICATION

(11) **EP 4 114 235 B1**
(45) Date of publication and mention of the grant of the patent: **15.01.2025**
(21) Application number: 21716812.9
(22) Date of filing: 01.03.2021
(51) Int. Cl.: A47J 31/06, A47J 31/34, E03C 1/04, E03C 1/044

(54) **A TAP**
HAHN
ROBINET

(30) Priority: 01.03.2020 GB 202002951
(43) Date of publication of application: 11.01.2023
(73) Proprietor: Ellsi Limited, Scunthorpe, Lincolnshire DN15 8SL (GB)
(72) Inventor: DELANEY, Paul, Scunthorpe Lincolnshire DN15 8SL (GB)
(74) Representative: Aldridge, Christopher Simon
(86) International application number: PCT/GB2021/050510
(87) International publication number: WO 2021/176201

(56) References cited:
- US-A- 5 816 135
- US-A- 5 816 135
- US-A1- 2015 004 288
- US-A1- 2015 004 288
- US-A1- 2015 344 285
- US-A1- 2015 344 285
- US-A1- 2018 244 541
- US-A1- 2018 244 541

## Description

### Field of the Invention

The invention relates to a tap, particularly a tap for making beverages.

### Background to the Invention

It is common in many households to have a kettle and a coffee making machine on the kitchen worktops. These devices take up a significant amount of space, which can be problematic in smaller kitchens. In addition to these devices being bulky, they require cleaning after each use to avoid residue building up. In recent years, coffee capsules have become more common to allow the coffee making machines to become more compact, which reduces the amount of cleaning required and allows for a wider variety of drinks to be readily made; however, they do still take up a significant amount of surface space.

As costs have reduced, it has become more common to install boiler taps that sit alongside existing hot and cold or mixer taps, or that are combined therewith as a single unit. These boiler taps allow for the dispensing of boiling water, thereby negating the need to have a separate kettle for boiling water, thus reducing the footprint of worktop devices and saving space.

US2018/244541 (Pirutin Shlomo) discloses a water tap having a filtering mechanism, wherein the filter can provide flavouring to water passing therethrough and to be dispensed through a first outlet. A bypass mechanism allows non-filtered water to be dispensed through a second outlet.

US2015/004288 (McHale James) discloses a hot water tap arrangement having a first, water outlet, and an associated beverage making system that dispenses through a second outlet that is separate from the first outlet.

### Summary of the Invention

Accordingly, the present invention is directed to a water tap assembly as set out in the accompanying claims. Such a water tap assembly comprises:
a water tap;
a water supply inlet on the water tap that is connected to a water supply;
a boiler unit that is fed from the water supply inlet and that returns water to the water tap; and
a tap outlet on the water tap that is fed from the water supply inlet and, separately, from the boiler unit;
and a flow regulator for regulating the flow of water through the water tap from the water supply inlet to the water tap outlet;
wherein the tap assembly further comprises a beverage making section on the water tap, the beverage making section having:
   an inlet;
   a cavity section having a sealable access aperture therein; and
   an outlet;
   wherein the inlet is in fluid communication with the outlet via the cavity section;and
   wherein the sealable access aperture provides access to the cavity to allow the insertion or removal of beverage ingredients; and
   wherein the cavity section of the beverage making section is fed from the boiler unit;
   characterised in that the water tap comprises a first conduit connecting the water supply inlet to the tap outlet and a second conduit connecting the water returned from the boiler unit to the tap outlet, and wherein the second conduit is contained within the first conduit.

Thus, the present invention comprises a water tap assembly that provides for the flow of water therethrough, with the additional element of having a beverage making section. The beverage making section that can be provided with water from the boiler unit and that comprises a cavity into which beverage making ingredients can be inserted, such as coffee grounds and/or tea leaves. Therefore, the present invention allows one to combine a water dispensing, mains-connected tap with a beverage making machine. By being connected to the main water supply, the requirement to repeatedly replenish a water reservoir may be removed.

In one arrangement, the beverage making section is fixedly connected to, or integral with, the mains connectable water tap. This allows for an arrangement wherein the beverage making section is held in place on the tap. Therefore, there is a reduced risk of parts being misplaced and reducing the risk of leakage. "fixedly connected" is intended to denote that the parts are connected to one another in a manner that they are not readily detachable from one another; however, the parts may be releasable for maintenance purposes, for example, by being connected to one another by respective threads or a connector that does allow the parts to disengage. For example, the beverage making section may be intended to stay on the tap when not being used; however, when it required cleaning or servicing, it can be disconnected.

Alternatively, the beverage making section is removeable from the water tap. The beverage making section may be readily and releasably connectable to the water tap, thereby making it easier to clean the beverage making section. Additionally, the beverage making section may be applied to the tap only at times when it is required, thereby allowing the tap to be used normally when the beverage making section is not in use. In this arrangement, the beverage making section is intended to be removed when not in use, rather than remaining in place. The connection between the tap and the beverage making section may be made by a push-fit or bayonet fitting, or it may be via respective threaded connections.

It is preferable that the cavity of the beverage making section is provided with an insert into which beverage making ingredients can be inserted. It is further preferable that the insert is either a removeable filter to holding loose particles or the insert is adapted to receive a capsule or pod. Thus, the cavity may be arranged to receive capsules or pods or, where a filter, basket or other water-permeable element is employed, loose grounds or leaves.

It may be advantageous that a valve is provided upstream of the beverage making section and the valve is connected to a bypass conduit, which is provided to allow flow to pass around the outside beverage making section. This allows a user to bypass or circumvent the beverage making section, thus allowing the tap to function in a regular manner to dispense water, particularly cold or hot water, when the beverage making section is not required. Alternatively, the water from the supply may flow through a bypass channel in the beverage making section and water from the boiler unit may flow through the cavity section and water from another source; the outlet in the beverage making section potentially being common to both of the routes taken.

Preferably, a temperature control is provided to adjust the temperature of the water leaving the tap outlet, particularly water that is from the boiler unit. This allows the user to adjust the temperature of the water dispensed from the tap, thereby allowing the user to reduce the temperature of the water for particular purposes, for example to avoid scorching or burning coffee or tea leaves, whilst also allowing for near-boiling water to be dispensed, when required.

The boiler unit may allow for water to be dispensed at a high temperature, for example, up to 96°C or 98°C. This may be predetermined to be above a particular threshold and below a second threshold.

In one arrangement, the beverage making section comprises a bypass channel or pathway that allows water received therein to pass around the cavity section and to the tap outlet. This allows a bypassing of the cavity where it is preferable that the water is not provided with additives or beverage making ingredients. Whilst the user could remove any additives from the flow path of the water, having a bypass allows a secondary route through the beverage making section that avoids the risk of flavourings contaminating the water.

In a preferred embodiment, the bypass arrangement is position in the periphery of the beverage making section. Having the bypass in the periphery, through which the mains water passes, reduces the risk of injury because the water from the boiler unit passes through the centre of the beverage making section. Thus, the bypass arrangement provides some insulation from the water from the boiler unit.

According to the invention, the water tap comprises a first conduit connecting the water supply, or mains water supply, to the tap outlet and a second conduit connecting the water returned from the boiler unit to the tap outlet. This ensures that the flow of water from the mains and from the boiler unit are not cross-contaminated.

According to the invention, the second conduit is contained within the first conduit. This may be coaxial so that the first conduit provides some thermal insulation to the second conduit, thereby reducing the risk of a user receiving a burn, should the user touch the outside of the tap arrangement. It will be appreciate that the conduits may not be coaxial.

In a preferred embodiment, the first conduit is connected to the bypass of the beverage making section and the second conduit is connected to the cavity of the beverage making section. This arrangement can be used to connect the water from the boiler unit to the cavity to make hot beverages and for the water supply to the tap, which may be hot or cold water to make less hot, warm or cold beverages.

Also disclosed herein but not claimed is a beverage making section attachment for attachment to a hot water tap, the beverage making section attachment having:
an inlet;
a cavity section having a sealable access aperture therein;
an outlet; and
an attachment mechanism to allow attachment of the device to a hot water tap; wherein the inlet is in fluid communication with the outlet via the cavity section; and wherein a bypass passageway is provided to allow the flow of water around the cavity without passing therethrough
   and
wherein the sealable access aperture provides access to the cavity to allow the
insertion or removal of beverage ingredients.

The beverage making section is able to releasably connect to a hot water tap. This allows a beverage making section to be retrofitted to an existing tap, for example a pre-installed boiler tap.

The beverage making section may be connected to a tap by way of a push-fit connection, bayonet fitting, respective screw threaded elements, a clamp mechanism or another connection system.

Also disclosed herein but not claimed is a tap unit for installation in a water tap assembly as described herein. Preferably, the tap is connected to a mains water supply.

### Brief Description of the Drawings

Embodiments of the present invention will now be described, by way of example only, and with reference to the accompanying drawings, in which:
Figure 1 shows a tap incorporating a beverage making section in accordance with a first embodiment of the present invention;
Figure 2 shows a sectional view of the beverage making section of the tap of Figure 1;
Figure 3 shows a tap incorporating a beverage making section in accordance with a second embodiment of the present invention;
Figure 4 shows a sectional view of the beverage making section of the tap of Figure 2
Figures 5 and 6 show further beverage making sections for use with a tap of the present invention.

### Detailed Description of Exemplary Embodiments

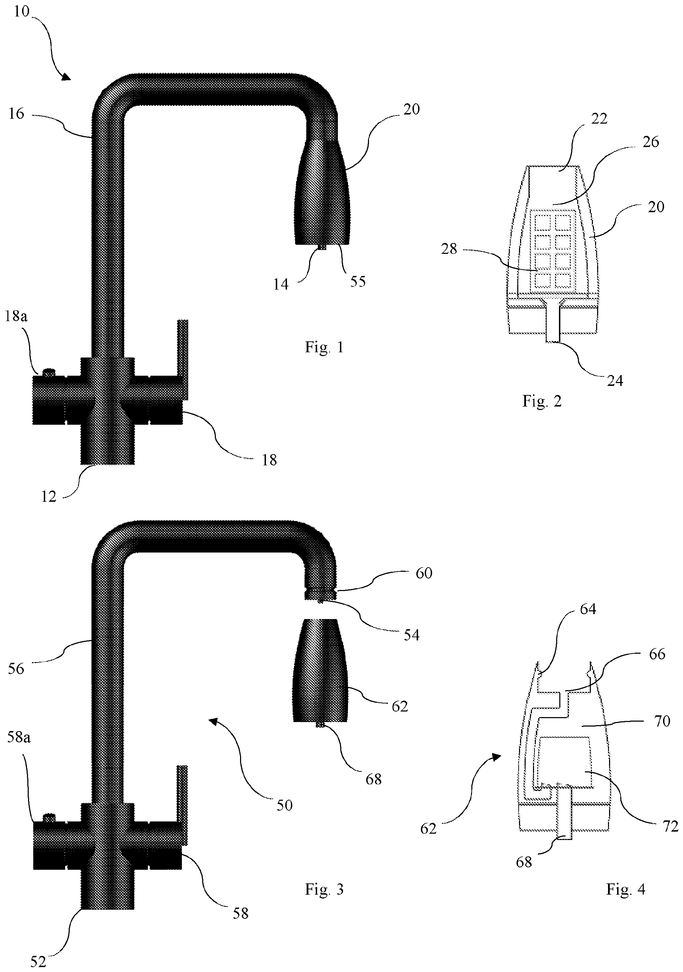

Figures 1 and 2 show a tap 10 having a mains inlet 12 and a tap outlet 14, with the mains inlet 12 and the tap outlet 14 being in fluid communication with one another via a conduit 16. At a position between the mains inlet 12 and the tap outlet 14, there is provided a flow regulating mechanism 18 in the form of a user operated valve 18 with a handle. Adjacent the tap outlet 14 is a fixedly connected beverage making section 20.

The beverage making section 20 comprises an inlet 22 in fluid communication with an outlet 24 via a cavity section 26. The beverage making section is provided with at least one sealable aperture to allow the addition and/or removal of beverage making ingredients, such as coffee and/or tea. The sealable aperture may be positioned at one end of the beverage making section, or it may be arranged in the sidewall thereof. The aperture is sealable to reduce the risk of injury to a user and to ensure that the beverage can be properly brewed within the beverage making section 20.

The cavity section 26 is able to receive a filter 28 into which the beverage making ingredients can be inserted. The filter 28 can be removed from the cavity for cleaning and filling with replacement ingredients for preparing further beverages.

Figures 3 and 4 shows a tap 50 having a mains inlet 52 and a tap outlet 54, with the mains inlet 52 being in fluid communication with one another via a conduit 56. At a position between the mains inlet 52 and the tap outlet 54, there is provided a flow regulating mechanism 58 in the form of a user operated valve 58. Adjacent the tap outlet 54 is a first part of a connection mechanism, in the form of a groove 60. There is also provided a beverage making section 62 that comprises a second part of the connection mechanism, in the form of a protruding section 64. The protruding section 64 may comprise a resiliently yieldable seal such that it can engage the groove 62 so that the beverage making section 62 is releasably connectable to the end of the tap 50.

The beverage making section 62 comprises an inlet 66 in fluid communication with an outlet 68 via a cavity section 70. The beverage making section is provided with at least one sealable aperture to allow the addition and/or removal of beverage making ingredients, such as loose particulate substances, such as coffee and/or tea. The sealable aperture may be positioned at one end of the beverage making section, or it may be arranged in the sidewall thereof. The aperture is sealable to reduce the risk of injury to a user and to ensure that the beverage can be properly brewed within the beverage making section 62. The inlet 66 of the beverage making section 62 extends towards the distal end thereof and is provided with a U-shaped section to allow water to pass back towards the tap section second part of the connection mechanism 64. This allows the beverage making section 62 to pierce a capsule in an appropriate manner to allow the water to flow through the beverage ingredients, where after it is dispensed from the outlet 68. Clearly, the inlet may take a different route within the cavity, as required.

The cavity section 70 is adapted to receive a capsule 72. The cavity 70 may be further provided with mechanism to load a capsule into the correct position for use and to dispense the capsule 72 when the beverage has been made. This may be associated with the connection mechanism such that when the beverage making section is connected to the tap 50, the capsule 72 is loaded into position. When the beverage making section 60 is removed from the tap 50, the capsule 72 can be moved to an eject position adjacent the sealable aperture.

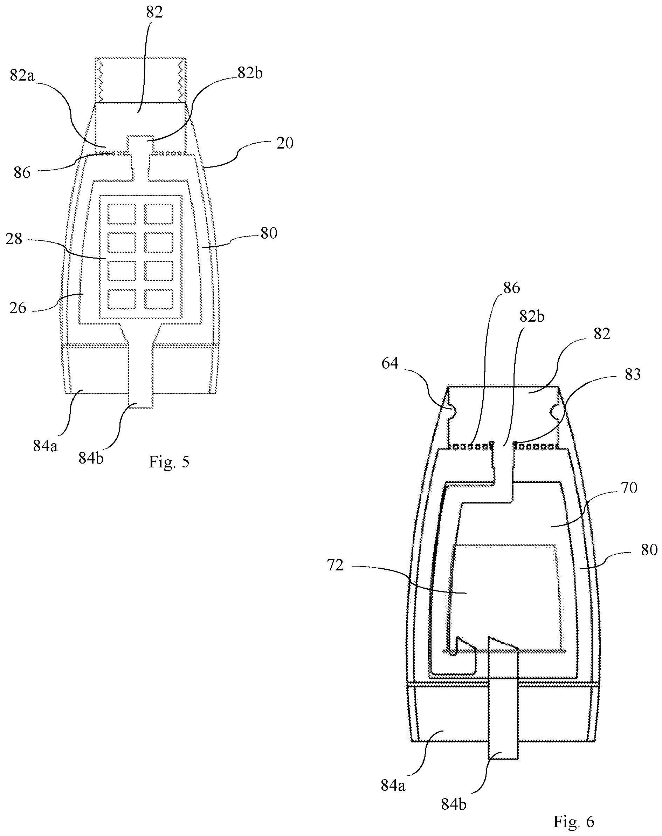

Figure 5 and 6 show arrangements similar to those shown in Figures 3 and 4. The beverage making sections shown therein have an inlet 82 that is split into a bypass inlet 82a and a cavity inlet 82b. At the outlet end of the beverage making sections, the outlet comprises a bypass outlet 84a and a cavity outlet 84b.

The tap 10 is provided with a supply of water, which may be water provided below a predetermined threshold, such as 75°C. The first control 18/58 operates the tap and allows the flow of water from the supply, through the tap 10/50 via a first conduit and to the beverage making section 20/62. A second control 18a/58a provides water from the inlet to a boiler unit, wherein it is heated to a temperature between 75°C and 99°C. The supply of water to the boiler unit can be arranged to displace water already in the boiler unit, which then flows through a second conduit in the tap to the tap outlet. The second conduit is, preferably, arranged coaxially with the first conduit, to insulate the outer surface of the tap from the water from the boiler unit. Thus, the outlet of the tap may comprise a central outlet 54, that is connected to the second conduit, shown best in Figure 3, and a surrounding outlet 55 that is coaxial therewith and extends around the central outlet 54. It will be appreciated that the tap of Figure 1 may have a similar arrangement, although not visible in the figure because of the fixedly connected beverage making section 20.

The dual flow of water through the tap results in the outlet of the tap 10/50 having two flow paths therethrough; a first of water from the mains supply; and a second of water from the boiler unit. The beverage making section 80 is able to fit those respective outlets, with the boiler water outlet 54 being directed to the cavity inlet 82b and the mains water outlet 55 being directed to the bypass inlet 82a. Thus, when the mains water flows through the tap 10/50 it passes through the first conduit and to the bypass inlet 82a of the beverage making section 80 and, subsequently passes through the beverage making section, without passing through the cavity, to be dispensed through outlet 84a. Similarly, the water from the boiler unit passes through the second conduit to the cavity inlet 82b, whereafter it enters the cavity 26, mixes with any additives contained therein, and is dispensed through outlet 84b.

An aerator element 86 is positioned within the inlet of the beverage making section 20/62 to aerate the water supply that passes from the first conduit therethrough, with the additional benefit of holding the cavity outlet 84b in place within the outlet of the tap arrangement.

In the embodiment of Figure 5, as the beverage making section is integrated into the tap, the cavity inlet therein is adapted to receive the end of the second conduit that passes through the tap.

In the embodiment of Figure 6, in view of the beverage making section being removable, an O-ring elastomeric seal 83 is provided at the top surface of the cavity inlet 82b. This seal 83 reduces the risk of water passing into the wrong inlet of the beverage making section.

Either of the embodiments shown in the figures can be provided with a further user control to adjust the temperature of the water passing through the tap. This is particularly useful wherein the tap is connected to a boiler using to allow for boiling, or near boiling, water to pass into the tap and to flow therethrough.

The capsule may be placed into the removable beverage marking section through the end that connects to the tap; thus the sealable aperture may also be the connection to the tap and the inlet to the beverage making section.

The removable beverage making section may be provided independently of a tap. Additionally, it is envisaged that an existing tap may be adapted to be provided with a connection mechanism to receive the beverage making section, for example, by creating a groove therein; however, the removable beverage making section may be connectable to an installed tap, for example, by way of a seal section, for example a resiliently yieldable elastomeric seal, that can be push-fitted onto the end of the tap.

The flow regulator may be a tap with a handle, a biometric control or an electronic control. Thus, the temperature control may also be part of the flow regulator.

In one arrangement there may be a first flow regulator for controlling the dispensing of water from the boiler section and a second flow regulator for controlling the dispensing of the water from the mains inlet. The mains water inlet is, preferably, below a predetermined threshold, such as hot water below 75°C, and the water supplied from the boiler unit is above the predetermined threshold. Clearly, a single flow regulator or actuator may be employed. Thus, the single flow regulator may be operated in one manner, for example turning one way, to operate the boiling water and in another way to operate water that does not come from the boiler unit.

It is envisaged that the beverage making section may be provided with a valve mechanism to allow the mains water into the cavity section. This allows a user to obtain warm or cold beverages using water below a predetermined threshold. In one arrangement, a twist mechanism may be employed to allow a user to twist a part of the beverage making section, for example, the top, to direct the mains water into the cavity section. Similarly, in one embodiment, the water from the boiler unit may pass through the bypass section of the beverage making section using a similar valve mechanism.

Elements of one or more embodiment may be incorporated into a different embodiment, for example, the filter of one embodiment may be substituted for a capsule or pod, as described in a different embodiment.

## Claims

1. A water tap assembly comprising
a water tap (10, 50);
a water supply inlet (12, 52) on the water tap that is connected to a water supply;
a boiler unit that is fed from the water supply inlet (12, 52) and that returns water to the water tap (10, 50); and
a tap outlet (14, 54, 55) on the water tap that is fed from the water supply inlet (12, 52) and, separately, from the boiler unit; and
a flow regulator (18, 18a, 58, 58a) for regulating the flow of water through the water tap from the water supply inlet (12, 52) to the water tap outlet (14,54,55);
wherein the tap assembly further comprises a beverage making section (20, 62) on the water tap, the beverage making section (20, 62) having: an inlet (22, 66) a cavity section (26, 70) having a sealable access aperture therein; and
an outlet (24, 68); wherein the inlet (22, 66) is in fluid communication with the outlet (24, 68) via the cavity section (26, 70); and
wherein the sealable access aperture provides access to the cavity (26, 70) to allow the insertion or removal of beverage ingredients; and
wherein the cavity section (26, 70) of the beverage making section (20, 62) is fed from the boiler unit;
**characterised in that** the water tap comprises a first conduit connecting the water supply inlet (12, 52) to the tap outlet (55) and a second conduit connecting the water returned from the boiler unit to the tap outlet (14, 54), and wherein the second conduit is contained within the first conduit.

2. A water tap assembly according to claim 1, wherein the beverage making section (20) is fixedly connected to the mains connectable water tap.

3. A water tap assembly +" according to claim 1, wherein the beverage making section (62) is removeable from the water tap.

4. A water tap assembly according to any preceding claim, wherein the cavity (20) is provided with an insert (28) into which beverage making ingredients can be inserted.

5. A water tap assembly according to claim 4, wherein the insert (28) is either a removeable filter to holding loose particles or the insert is adapted to receive a capsule.

6. A water tap assembly according to any preceding claim, wherein a valve is provided upstream of the beverage making section (20, 62) and the valve is connected to a bypass conduit to allow flow to pass around the beverage making section (20, 62).

7. A water tap assembly according to any preceding claim, wherein a temperature control is provided to adjust the temperature of the water leaving the tap outlet (14, 54, 55).

8. A water tap assembly according to any preceding claim, wherein the beverage making section (20, 62) further comprises a bypass (82) that allows water received therein to pass around the cavity section and to the tap outlet (84a).

9. A water tap assembly according to claim 8, wherein the bypass arrangement is positioned in the periphery of the beverage making section.

10. A water tap assembly according to claim 8 or claim 9, wherein
the first conduit is connected to the bypass of the beverage making section and;
the second conduit is connected to the cavity of the beverage making section.

## Patentansprüche

1. Wasserhahnbaugruppe, umfassend:
einen Wasserhahn (10, 50);
einen Wasserzufuhreinlass (12, 52) an dem Wasserhahn, der mit einer Wasserzufuhr verbunden ist;
eine Boilereinheit, die aus dem Wasserzufuhreinlass (12, 52) gespeist wird und die Wasser zu dem Wasserhahn (10, 50) zurückführt; und
einen Hahnauslass (14, 54, 55) an dem Wasserhahn, der aus dem Wasserzufuhreinlass (12, 52) und separat aus der Boilereinheit gespeist wird; und
einen Durchflussregler (18, 18a, 58, 58a) zum Regeln des Durchflusses von Wasser durch den Wasserhahn von dem Wasserzufuhreinlass (12, 52) zu dem Wasserhahnauslass (14, 54, 55);
wobei die Hahnbaugruppe ferner einen Getränkezubereitungsabschnitt (20, 62) an dem Wasserhahn umfasst, wobei der Getränkezubereitungsabschnitt (20, 62) Folgendes aufweist:
einen Einlass (22, 66),
einen Hohlraumabschnitt (26, 70), der einen verschließbaren Zugriffsdurchlass darin aufweist; und
einen Auslass (24, 68);
wobei der Einlass (22, 66) über den Hohlraumabschnitt (26, 70) in Fluidkommunikation mit dem Auslass (24, 68) steht; und
wobei der verschließbare Zugriffsdurchlass Zugriff auf den Hohlraum (26, 70) bereitstellt, um das Einsetzen oder Entfernen von Getränkezutaten zu ermöglichen; und
wobei der Hohlraumabschnitt (26, 70) des Getränkezubereitungsabschnitts (20, 62) aus der Boilereinheit gespeist wird;
**dadurch gekennzeichnet, dass** der Wasserhahn eine erste Leitung, die den Wasserzufuhreinlass (12, 52) mit dem Hahnauslass (55) verbindet, und eine zweite Leitung, die das von der Boilereinheit zurückgeführte Wasser mit dem Hahnauslass (14, 54) verbindet, umfasst, und wobei die zweite Leitung innerhalb der ersten Leitung enthalten ist.

2. Wasserhahnbaugruppe nach Anspruch 1, wobei der Getränkezubereitungsabschnitt (20) fest mit dem Wasserhahn verbunden ist, der mit dem Hauptanschluss verbindbar ist.

3. Wasserhahnbaugruppe nach Anspruch 1, wobei der Getränkezubereitungsabschnitt (62) von dem Wasserhahn entfernbar ist.

4. Wasserhahnbaugruppe nach einem vorhergehenden Anspruch, wobei der Hohlraum (26, 70) mit einem Einsatz (28) bereitgestellt ist, in den Zutaten für die Getränkezubereitung eingesetzt werden können.

5. Wasserhahnbaugruppe nach Anspruch 4, wobei der Einsatz (28) entweder ein entfernbares Filter zum Halten loser Partikel ist oder der Einsatz dazu ausgelegt ist, eine Kapsel aufzunehmen.

6. Wasserhahnbaugruppe nach einem vorhergehenden Anspruch, wobei ein Ventil stromaufwärts des Getränkezubereitungsabschnitts (20, 62) bereitgestellt ist und das Ventil mit einer Umgehungsleitung verbunden ist, um zu ermöglichen, dass ein Durchfluss um den Getränkezubereitungsabschnitt (20, 62) herum verläuft.

7. Wasserhahnbaugruppe nach einem vorhergehenden Anspruch, wobei eine Temperatursteuerung bereitgestellt ist, um die Temperatur des aus dem Hahnauslass (14, 54, 55) austretenden Wassers einzustellen.

8. Wasserhahnbaugruppe nach einem vorhergehenden Anspruch, wobei der Getränkezubereitungsabschnitt (20, 62) ferner eine Umgehung (82) umfasst, die es darin aufgenommenem Wasser ermöglicht, um den Hohlraumabschnitt herum und zu dem Hahnauslass (84a) zu verlaufen.

9. Wasserhahnbaugruppe nach Anspruch 8, wobei die Umgehungsanordnung im Randbereich des Getränkezubereitungsabschnitts positioniert ist.

10. Wasserhahnbaugruppe nach Anspruch 8 oder Anspruch 9, wobei
die erste Leitung mit der Umgehung des Getränkezubereitungsabschnitts verbunden ist und;
die zweite Leitung mit dem Hohlraum des Getränkezubereitungsabschnitts verbunden ist.

## Revendications

1. Ensemble robinet d'eau, comprenant :
un robinet d'eau (10, 50) ;
une entrée d'alimentation en eau (12, 52) sur le robinet d'eau qui est raccordée à une alimentation en eau ;
une unité de chaudière qui est alimentée à partir de l'entrée d'alimentation en eau (12, 52) et qui renvoie l'eau vers le robinet d'eau (10, 50) ; et
une sortie (14, 54, 55) de robinet sur le robinet d'eau qui est alimentée à partir de l'entrée d'alimentation en eau (12, 52) et, séparément, de l'unité de chaudière ; et
un régulateur de débit (18, 18a, 58, 58a) pour réguler le débit d'eau à travers le robinet d'eau allant de l'entrée d'alimentation en eau (12, 52) jusqu' à la sortie (14, 54, 55) de robinet d'eau ;
ledit ensemble robinet comprenant en outre une section de fabrication de boisson (20, 62) sur le robinet d'eau, ladite section de fabrication de boisson (20, 62) comportant :
une entrée (22, 66), une section de cavité (26, 70) dans laquelle se trouve une ouverture d'accès pouvant être fermée hermétiquement ; et
une sortie (24, 68) ;
ladite entrée (22, 66) étant en communication fluidique avec la sortie (24, 68) par l'intermédiaire de la section de cavité (26, 70) ; et
ladite ouverture d'accès pouvant être fermée hermétiquement fournissant un accès à la cavité (26, 70) pour permettre l'insertion ou le retrait d'ingrédients de boisson ; et
ladite section de cavité (26, 70) de la section de fabrication de boisson (20, 62) étant alimentée à partir de l'unité de chaudière ;
**caractérisé en ce que** le robinet d'eau comprend une première conduite raccordant l'entrée d'alimentation en eau (12, 52) à la sortie (55) de robinet et une seconde conduite raccordant l'eau renvoyée de l'unité de chaudière à la sortie (14, 54) de robinet, et ladite seconde conduite étant contenue à l'intérieur de la première conduite.

2. Ensemble robinet d'eau selon la revendication 1, ladite section de fabrication de boisson (20) étant raccordée de manière fixe au robinet d'eau raccordable au réseau.

3. Ensemble robinet d'eau selon la revendication 1, ladite section de fabrication de boisson (62) pouvant être retirée du robinet d'eau.

4. Ensemble robinet d'eau selon une quelconque revendication précédente, ladite cavité (26, 70) étant dotée d'un insert (28) dans lequel des ingrédients de fabrication de boisson peuvent être insérés.

5. Ensemble robinet d'eau selon la revendication 4, ledit insert (28) étant un filtre amovible contenant des particules en vrac, ou ledit insert étant adapté pour recevoir une capsule.

6. Ensemble robinet d'eau selon une quelconque revendication précédente, une soupape étant disposée en amont de la section de fabrication de boisson (20, 62) et ladite soupape étant raccordée à une conduite de dérivation pour permettre à un écoulement de passer autour de la section de fabrication de boisson (20, 62).

7. Ensemble robinet d'eau selon une quelconque revendication précédente, une commande de température étant prévue pour régler la température de l'eau quittant la sortie (14, 54, 55) de robinet.

8. Ensemble robinet d'eau selon une quelconque revendication précédente, ladite section de fabrication de boisson (20, 62) comprenant en outre une dérivation (82) qui permet à l'eau reçue dans celle-ci de passer autour de la section de cavité et vers la sortie (84a) de robinet.

9. Ensemble robinet d'eau selon la revendication 8, ledit agencement de dérivation étant positionné dans la périphérie de la section de fabrication de boisson.

10. Ensemble robinet d'eau selon la revendication 8 ou la revendication 9,
ladite première conduite étant raccordée à la dérivation de la section de fabrication de boisson et ;
ladite seconde conduite étant raccordée à la cavité de la section de fabrication de boisson.
